# DEMANDE DE BREVET EUROPEEN

(11) **EP 2 733 129 A2**
(43) Date de publication de la demande: **21.05.2014**
(21) Numéro de dépôt: 13192952.3
(22) Date de dépôt: 14.11.2013
(51) Int. Cl.: C04B 28/08, C04B 14/06, C04B 111/00, C04B 28/04, C04B 111/70

(54) **Coulis pour sondes géothermiques**

(30) Priorité: 15.11.2012 FR 1260869
(71) Demandeur: Soletanche Freyssinet, 92500 Rueil Malmaison (FR)
(72) Inventeur: JUSTINO, Christophe, 92500 RUEIL MALMAISON (FR); DEMARCQ, Bruno, 92500 RUEIL MALMAISON (FR)
(74) Mandataire: Nevant, Marc

(57) **Abrégé**

L'invention concerne un mélange précurseur pour coulis destiné à la mise en place de sondes géothermiques, ledit mélange contenant un matériau à prise hydraulique et de la silice. L'invention concerne également un coulis obtenu à partir dudit mélange précurseur, ainsi que l'utilisation de ce coulis.

## Description

### Domaine technique de l'invention

La présente invention concerne le domaine de la géothermie. Plus précisément, l'invention concerne un coulis possédant une bonne conductivité thermique, adapté à la pose de sondes géothermiques.

### Etat de la technique

Les sondes géothermiques permettent d'exploiter la chaleur de la terre des terrains superficiels sans mobiliser l'eau souterraine. Leur principe de fonctionnement est de capter la chaleur des couches traversées par conduction et de la transférer à l'évaporateur d'une pompe à chaleur. Ce sont des échangeurs thermiques verticaux constitués de deux tubes de polyéthylène en U, installés dans un forage de plusieurs dizaines de mètres de profondeur et scellés dans celui-ci par un coulis conducteur à base de ciment. Un liquide caloporteur (eau + antigel biodégradable de qualité alimentaire) circule dans ces tubes et cède son énergie à la pompe à chaleur. Le coulis de scellement est spécialement adapté à la géothermie. Il évite tout risque accidentel de pollution du terrain et des nappes d'eau souterraines, et optimise l'échange thermique entre le sol et le liquide caloporteur qui circule dans les sondes. Le coulis est injecté sous forme liquide depuis le bas du forage ; le ciment durcit dans les trois ou quatre jours qui suivent.

La demande EP-A-774 446 décrit un coulis destiné à être injecté dans une canalisation enterrée contenant des lignes à haute tension, comprenant un mélange de ciment, d'eau de bentonite et de dolomie. D'après les exemples la conductivité thermique du coulis est de l'ordre de 1,20 W/m.K.

La demande DE 10 2007 031418 décrit un mortier sec susceptible d'être utilisé pour préparer un coulis pour sceller des sondes géothermiques, ledit mortier comprenant : de 15 à 40% en masse de ciment ; de 30 à 60% en masse de sable ; et de 15 à 50% en masse d'un mélange d'argile constitué de mica (10 à 30% en masse), de silice libre (25 à 30% en masse), de kaolinite (plus de 25% en masse) et de smectite (moins de 1% en masse).

Le brevet US6251179 décrit de manière générale un coulis pour sondes géothermiques comprenant un matériau à base de ciment, du sable de silice dans un rapport pondéral de 1:1 à 4:1 par rapport audit matériau à base de ciment, un superplastifiant de type naphtalène sulfonate dans un rapport pondéral de 0,0005:1 à 0,03:1 par rapport au matériau à base de ciment et au sable, et de l'eau dans un rapport pondéral de 0,2:1 à 2:1 par rapport au matériau à base de ciment et au sable. Ce coulis est présenté comme possédant une conductivité thermique d'au moins 1,5 W/m.K après durcissement à l'état humide pendant 28 jours. Le ciment utilisé dans le matériau à base de ciment est un ciment ASTM C 150 de type I, catégorie qui regroupe les ciments Portland.

La demande CN-A-1 120 029 décrit de manière générale un mélange pour coulis destiné à des puits pétroliers ou géothermiques, qui comprend de 30 à 60% en poids de poudre de laitier, de 10 à 20% en poids de sable de quartz, de 30 à 50% en poids de ciment de classe G et moins de 1% en poids d'activateur. Cette demande décrit donc un coulis contenant un mélange de laitier et de ciment de classe G (ciment qui n'est pas nécessairement un ciment de type CEM III). De plus, les exemples de cette demande concernent des coulis contenant moins de sable de quartz que de laitier ou de ciment.

La demande CN-A-1 183 453 décrit de manière générale un mélange pour coulis destiné à des puits pétroliers ou géothermiques, qui comprend de 20 à 80% en poids de laitier, de 10 à 80% en poids de matériau à base de silice et de 0 à 50% en poids de matériau modifié tel qu'un clinker. Il est à noter que dans les exemples de coulis contenant de la silice, cette dernière est présente en quantité inférieure à celle du laitier ou du clinker.

D'autres coulis pour sondes géothermiques sont décrits dans les documents US7067004 ; US2007/0125274 ; US7938904 ; DE 10 2004 039107.

### Résumé de l'invention

Un objectif de l'invention réside dans la formulation d'un précurseur de coulis qui permette l'obtention d'un coulis adapté pour la pose de sondes géothermique.

Un autre objectif de l'invention réside dans la mise au point d'un précurseur de coulis à faible coût de fabrication tout en étant compatible avec l'objectif ci-dessus.

Un autre objectif de l'invention réside dans la formulation d'un précurseur de coulis sans ciment et qui soit donc plus respectueux de l'environnement.

Un autre objectif de l'invention réside dans la préparation d'un coulis à partir du précurseur susmentionné.

Ces objectifs sont atteints :
- d'une part, par un précurseur de coulis comprenant un matériau à prise hydraulique et de la silice ayant une D50 ≥ environ 40 µm, notamment une D50 > environ 65µm ;
- d'autre part, par un coulis obtenu par mélange dudit précurseur et d'eau.

### Description de l'invention

Selon un premier aspect, l'invention concerne un mélange précurseur de coulis pour sonde géothermique, ledit mélange comprenant :
(a) un matériau à prise hydraulique choisi parmi un ciment de type CEM III et un laitier de haut fourneau,
(b) éventuellement, un agent de contrôle de la rhéologie, et
(c) de la silice ayant une D50 ≥ environ 40 µm, en particulier une D50 > environ 65 µm,
le rapport pondéral [(a) + (b)] / (c) étant compris dans la gamme allant d'environ 20:80 à environ 5:95.

Sauf indication contraire, « un ciment de type CEM III » signifie un ou plusieurs ciments de type CEM III ; « un laitier de haut fourneau » signifie un ou plusieurs laitiers de haut fourneau ; « un agent de contrôle de la rhéologie » signifie un ou plusieurs agents de contrôle de la rhéologie.

Le matériau à prise hydraulique utilisé dans le mélange pour coulis de l'invention est soit un ciment de type CEM III, soit un laitier de haut fourneau.

On distingue plusieurs types de ciment selon la norme NF EN 197-1 : les ciments de type CEM I, également appelés ciments Portland ; les ciments de type CEM II, également appelés ciments Portland composés ; les ciments de type CEM III, également appelés ciments de haut fourneau ; les ciments de type CEM IV, également appelés ciments pouzzolaniques ; les ciments de type CEM V, également appelés ciments composés. Les seuls ciments utilisés comme matériaux à prise hydraulique dans le mélange pour coulis de l'invention sont les ciments de type CEM III.

Le laitier de haut fourneau utilisé dans le cadre de la présente invention possède avantageusement une finesse comprise dans la gamme allant d'environ 2500 à environ 5000 Blaine (cm²/g), de préférence dans la gamme allant d'environ 3500 à environ 4500 Blaine. Bien que la nature du laitier de haut fourneau ne soit pas particulièrement critique, il est préférable que celui-ci soit du type basique et que le rapport pondéral CaO/SiO₂ soit compris dans la gamme allant d'environ 1,10 à environ 1,35. A titre d'exemple de laitier utilisable dans le cadre de la présente invention, on peut citer un matériau comprenant comme composants principaux (en pourcentage en poids), 33 à 40 % de SiO₂, 8 à 16 % d'Al₂O₃, 39 à 44 % de CaO, et 4 à 9 % de MgO. Par ailleurs, il est également préférable que le module chimique du laitier (teneur (%) en CaO x teneur (%) en Al₂O₃) soit supérieur à environ 450.

L'agent de contrôle de la rhéologie utilisé dans le cadre de l'invention est avantageusement choisi parmi une argile naturelle ou modifiée, telle que la bentonite, en particulier la bentonite sodique ; une cellulose modifiée ; un gel de polyacrylamide ; un polysaccharide, tel que la gomme de xanthane ; ou un mélange de ces composés. De préférence, l'agent de contrôle de la rhéologie est une argile naturelle ou modifiée, ou un polysaccharide.

La silice utilisée dans le cadre de l'invention a une granulométrie D50 ≥ environ 40 µm, de préférence une granulométrie D50 comprise dans la gamme allant d'environ 40 µm à environ 80 µm, de préférence une granulométrie comprise dans la gamme allant d'environ 40 µm à environ 65 µm, de préférence encore une granulométrie comprise dans la gamme allant d'environ 40 µm à environ 50 µm. Dans un mode de réalisation, la silice a une granulométrie D50 > environ 65 µm. La granulométrie peut être déterminée par différentes techniques, de préférence par la technique de diffraction laser en utilisant par exemple un appareil Malvern Mastersizer.

Conformément à l'invention, le rapport pondéral [(a) + (b)] / (c) est compris dans la gamme allant d'environ 20:80 à environ 5:95, de préférence dans la gamme allant d'environ 15 :85 à environ 5 :95.

De manière avantageuse, les ingrédients (a), (b) et (c) représentent au moins 90% en poids, de préférence au moins 95% en poids du mélange.

Dans un mode de réalisation de l'invention, le matériau à prise hydraulique est un ciment de type CEM III, et l'agent de contrôle de la rhéologie est facultatif.

Dans un autre mode de réalisation de l'invention, le matériau à prise hydraulique est un laitier de haut fourneau, et l'agent de contrôle de la rhéologie est présent. Le mélange peut alors également comprendre (d) un agent activant qui permet la prise du laitier. Cet agent est généralement basique, et il est avantageusement choisi parmi la soude, la potasse, le (bi)carbonate de sodium ou de potassium, le gypse, la chaux vive, la chaux éteinte et les mélanges de ces composés. La quantité d'agent activant est de préférence comprise dans la gamme allant d'environ 2,5% à environ 5% en poids, par rapport au poids du laitier de haut fourneau.

Le mélange selon l'invention peut également comprendre d'autres additifs comme par exemple un agent dispersant (tel que naphtalène sulfonate, mélamine sulfonate, polyacrylate de sodium, polycarboxylate) à raison d'environ 0,1 à environ 2% du poids de matériau à prise hydraulique ; un agent entraîneur d'air à raison d'environ 0,1 à environ 1% du poids de matériau à prise hydraulique ; ou un mélange de ces composés.

Le mélange selon l'invention permet de préparer un coulis adapté pour la pose de sondes géothermiques. Ainsi, selon un second aspect, l'invention concerne un coulis pour sonde géothermique comprenant, pour 1m³ de coulis, environ 500 L à environ 600 L d'eau et environ 1000 kg à environ 1300 kg du mélange défini ci-dessus.

Dans un mode de réalisation de l'invention, lorsque le matériau à prise hydraulique est un laitier de haut fourneau, le coulis est préparé à partir d'eau et d'un mélange précurseur ne contenant pas d'agent activant, ce dernier étant ajouté soit lors de la préparation du coulis proprement dite, soit une fois le coulis injecté dans la cavité destinée à recevoir une sonde géothermique. Dans ce mode de réalisation, l'agent activant est de préférence ajouté en une quantité comprise dans la gamme allant d'environ 2,5% à environ 5% en poids, par rapport au poids du laitier de haut fourneau.

Le coulis selon l'invention peut également comprendre d'autres additifs comme par exemple un agent dispersant à raison d'environ 0,1 à environ 2% du poids de matériau à prise hydraulique ; un agent entraîneur d'air à raison d'environ 0,1 à environ 1% du poids de matériau à prise hydraulique ; ou un mélange de ces composés.

Le coulis ainsi préparé possède une conductivité thermique supérieure ou égale à environ 2 W/m.K, notamment comprise dans la gamme allant d'environ 2 à environ 3 W/m.K, et présente avantageusement au moins l'une des propriétés suivantes :
* un rapport pondéral C/E compris dans la gamme allant d'environ 0,15 à environ 0,30 (C désigne ici soit le ciment CEM III, soit le laitier de haut fourneau, et E désigne l'eau) ;
* un rapport pondéral S/E compris dans la gamme allant d'environ 1,8 à environ 2,7 (S désigne ici les solides) ;
* une viscosité Marsh comprise dans la gamme allant d'environ 40 à environ 80 s, de préférence dans la gamme allant d'environ 45 à environ 60 s ;
* à l'état durci, une résistance mécanique à la compression (Rc) à 7 jours comprise dans la gamme allant d'environ 0,2 à environ 2 MPa ;
* à l'état durci, une résistance mécanique à la compression (Rc) à 28 jours comprise dans la gamme allant d'environ 1 à environ 3 MPa ;
* une perméabilité comprise dans la gamme allant d'environ 5x10⁻⁹ à environ 10⁻¹⁰ m/s ;
* une ressuée à 1h, 2h et 4h comprise dans la gamme allant d'environ 0% à environ 5%.

Le coulis conforme à l'invention possède donc une conductivité thermique compatible avec son utilisation pour la pose de sondes géothermiques. Ainsi selon un autre aspect, l'invention concerne un procédé pour la mise en place d'une sonde géothermique, ledit procédé comprenant une étape d'injection du coulis décrit ci-dessus dans une cavité destinée à recevoir ladite sonde géothermique. Lorsque le coulis est préparé à partir d'un mélange précurseur contenant un laitier de haut fourneau mais ne comprenant pas d'agent activant, le procédé conforme à l'invention comprend en outre une étape d'activation du laitier de haut fourneau. Il est ainsi possible, dans ce cas de figure, de préparer la quantité nécessaire de coulis avant injection, et de contrôler l'activation du laitier pour s'assurer d'une prise optimum. Le fait de pouvoir activer la prise du coulis sur demande présente deux avantages notoires:
- la possibilité de stockage (du coulis) en grand sac (« big bag »), ce qui améliore la pénibilité au travail du personnel en charge de la fabrication du coulis ;
- la préparation anticipée d'une gâchée de grande capacité, permettant une injection du coulis dès le détubage du forage, ce qui limite la quantité d'éboulements de la paroi du forage pouvant survenir et améliore donc la qualité de cimentation de la sonde géothermique.

Dans un mode de réalisation de l'invention, qui peut être combiné avec les modes de réalisation décrits précédemment, le mélange précurseur conforme à l'invention est essentiellement constitué des composants (a) et (c) et éventuellement (b) et/ou (d). On entend par « essentiellement constitué de » le fait que le mélange précurseur ne comprend pas d'autres composants susceptibles d'affecter les propriétés mécaniques et physico-chimiques du coulis qu'il sert à préparer (notamment conductivité thermique et résistance mécanique à la compression). Dans une variante, le mélange précurseur est constitué des composants précités.

Dans un autre mode de réalisation de l'invention, qui peut être combiné avec les modes de réalisation décrits précédemment, le coulis conforme à l'invention est essentiellement constitué d'eau, du mélange précurseur précité et d'un agent activant. On entend par « essentiellement constitué de » le fait que le coulis ne comprend pas d'autres composants susceptibles d'affecter les propriétés mécaniques et physico-chimiques (notamment conductivité thermique et résistance mécanique à la compression). Dans une variante, le coulis est constitué des composants précités.

### Détermination des propriétés

La conductivité thermique est mesurée selon la norme PR NF X10-950. Elle s'exprime en W/m. K.

La résistance mécanique à la compression à 7 jours et à 28 jours est mesurée selon la norme EN 12390-3. Elle s'exprime en MPa.

La viscosité Marsh est mesurée à l'aide du cône de Marsh. C'est une mesure conforme à la norme API 13B. Le mode opératoire consiste à remplir un entonnoir dont l'ajutage est parfaitement calibré (4,75 mm) et de mesurer le temps d'écoulement de 946 mL de fluide. La viscosité s'exprime en secondes.

La perméabilité est mesurée selon le protocole suivant : l'échantillon est placé dans une cellule triaxiale entourée d'une membrane en caoutchouc. On applique une étreinte latérale sur l'échantillon et on fait percoler de l'eau au travers de l'échantillon à une pression deux fois moindre que celle de l'étreinte latérale. On mesure le volume d'eau qui passe au travers de l'échantillon en fonction du temps. En appliquant la loi de DARCY on déduit la perméabilité exprimée en m/s.

La ressuée caractérise la stabilité du coulis. Il s'agit de l'eau d'exsudation lorsque le coulis est au repos. Cette ressuée est mesurée à l'aide d'une éprouvette graduée d'un litre. On remplit l'éprouvette de un litre de coulis et, après trois heures de repos, on mesure l'eau qui surnage à la surface du coulis. La ressuée est égale au rapport du volume d'eau surnageant sur le volume total de coulis avant exsudation.

L'invention est illustrée par les exemples suivants, donnés à titre purement indicatif.

### Exemple 1

On a préparé différents coulis, dont les compositions et propriétés sont indiquées dans le tableau 1, selon le protocole suivant. Dans un turbo malaxeur de type Rayneri on a introduit à 20°C de l'eau puis le mélange précurseur composé de ciment CEM III, de silice et le cas échéant d'agent de contrôle de la rhéologie puis on a malaxé le tout à 1500 tr/min (+/- 250 tr/min) pendant 5 min pour obtenir un coulis dont on a déterminé les propriétés.

**Tableau 1**

| | **Ex. 1** | **Ex. 2** | **Ex. 3** | **Ex. 4** |
|---|---|---|---|---|
| Eau (L/m³) | 510 | 582 | 578 | 578 |
| Bentonite sodique¹ (kg/m³) | - | - | 10 | 10 |
| Ciment CEM III/C² (kg/m³) | 100 | 120 | 120 | 120 |
| Silice³ (kg/m³) | 1200 | 1000 | 1000 | 1000 |
| C/E | 0,20 | 0,21 | 0,21 | 0,21 |
| S/E | 2,55 | 1,92 | 1,96 | 1,96 |
| | | | | |
| Viscosité Marsh (s) | nd | 42,7 | 47,7 | 48 |
| Densité | 1,83 | 1,7 | 1,73 | 1,72 |
| Ressuée 1h (%) | 1 | 2 | 1 | 1 |
| Ressuée 2h (%) | 1 | 4 | 2 | 2 |
| Ressuée 4h (%) | 1 | 4 | 2 | 2 |
| Rc 7j (MPa) | 0,9 | 0,57 | 0,57 | 0,3 |
| Rc 28j (MPa) | 1,96 | 1,55 | 1,3 | 1,4 |
| Conductivité thermique (W/mK) | 2,34 | 2,1 | >2* | >2* |

| | | | | |
|---|---|---|---|---|
| ¹ commercialisée par la société Süd-Chemie sous la dénomination Bentonil CV15T ² commercialisé par la société Calcia sous la dénomination CEM III/C 32,5 PM ES ³ commercialisée par la société Sifraco sous la dénomination Millisil C4 * estimation théorique en fonction des résultats des exemples 1 et 2 nd : non déterminé | | | | |

### Exemple 2

On a préparé différents coulis, dont les compositions et propriétés sont indiquées dans le tableau 2, selon le protocole suivant. Dans un turbo malaxeur de type Rayneri on a introduit à 20°C de l'eau puis le mélange précurseur composé de laitier de haut fourneau, de silice, d'agent de contrôle de la rhéologie et d'agent activant, puis on a malaxé le tout à 1500 tr/min (+/- 250 tr/min) pendant 5 min pour obtenir un coulis (exemples 5, 6 et 9) dont on a déterminé les propriétés. Le coulis des exemples 7, 10 et 11 a été obtenu en malaxant pendant 5 min l'eau et un mélange précurseur composé de laitier de haut fourneau, de silice et d'agent de contrôle de la rhéologie, puis en ajoutant l'agent activant et en malaxant le tout pendant 5 min. Le coulis de l'exemple 8 a été obtenu en malaxant pendant 4h l'eau et un mélange précurseur composé de laitier de haut fourneau, de silice et d'agent de contrôle de la rhéologie, puis en ajoutant l'agent activant et en malaxant le tout pendant 5 min. Les propriétés de ces autres coulis ont également été déterminées.

**Tableau 2**

| | **Ex. 5** | **Ex. 6** | **Ex. 7** | **Ex. 8** | **Ex. 9** | **Ex. 10** | **Ex. 11** |
|---|---|---|---|---|---|---|---|
| Eau (L/m³) | 578 | 502 | 578 | 578 | 578 | 580 | 575 |
| Bentonite sodique¹ (kg/m³) | 20 | 10 | 5 | 5 | 10 | - | 10 |
| Gomme de xanthane⁶ (kg/m³) | - | - | - | - | - | 1 | - |
| Laitier de haut fourneau⁴ (kg/m³) | 120 | 100 | 120 | 120 | 120 | 120 | 120 |
| Soude⁵ (kg/m³) | 6 | 5 | 6 | 6 | 6 | 6 | 6 |
| Silice³ (kg/m³) | 1000 | 1200 | 1000 | 1000 | 1000 | 1000 | 1000 |
| C/E | 0,22 | 0,21 | 0,22 | 0,22 | 0,22 | 0,22 | 0,22 |
| S/E | 1,98 | 2,62 | 1,98 | 1,98 | 1,98 | 1,94 | 1,98 |
| | | | | | | | |
| Viscosité Marsh (s) | nd | nd | 44,4 | 43,7 | 59 | 85,4 | nd |
| Densité | 1,75 | 1,86 | 1,74 | 1,74 | 1,74 | 1,72 | 1,71 |
| Ressuée 1h (%) | 1 | 0 | 4 | 3 | 1 | nd | nd |
| Ressuée 2h (%) | 1 | 1 | 5 | 5 | 2 | nd | nd |
| Ressuée 4h (%) | 2 | 2 | nd | nd | nd | nd | nd |
| Rc 7j (MPa) | 1,3 | 1,5 | 1,25 | 1 | 1,2 | 0,7 | 1,4 |
| Rc 28j (MPa) | 2,05 | 2,5 | 1,8 | 1,7 | 1,95 | 1,95 | 2,8 |
| Conductivité thermique, (W/mK) | nd | 2,4 | nd | 2,2 | 2,25 | >2 | >2 |

| | | | | | | | |
|---|---|---|---|---|---|---|---|
| ¹ et ³ : cf. tableau 1 ⁴ commercialisé par la société Ecocem sous la dénomination Laitier Ecocem ⁵ commercialisée par la société VWR sous la dénomination Hydroxyde de sodium ⁶ commercialisée par la société Clariant sous la dénomination SC XGUM nd : non déterminé | | | | | | | |

On peut constater à la lecture des tableaux 1 et 2 que le coulis conforme à l'invention possède une conductivité thermique (>2 W/m.K) compatible avec son utilisation pour la pose de sondes géothermiques. On constate également que les coulis avec un laitier de haut fourneau (exemples 5 à 11) ont des propriétés comparables voire supérieures à celles des coulis avec ciment, en particulier en ce qui concerne la résistance à la compression et la durabilité. La présente invention fournit donc, dans l'une de ses variantes, des moyens de mise en oeuvre écologiques et performants pour la pose de sondes géothermiques.

## Revendications

1. Mélange pour coulis pour sonde géothermique, qui comprend :
(a) un matériau à prise hydraulique choisi parmi un ciment de type CEM III et un laitier de haut fourneau,
(b) éventuellement, un agent de contrôle de la rhéologie, et
(c) de la silice ayant une D50 ≥ 40 µm, en particulier une D50 > 65 µm,
le rapport pondéral [(a) + (b)] / (c) étant compris dans la gamme allant de 20:80 à 5:95, les ingrédients (a), (b) et (c) représentant au moins 90% en poids, de préférence au moins 95% en poids du mélange.

2. Mélange selon la revendication 1, dans lequel le matériau à prise hydraulique est un ciment de type CEM III.

3. Mélange selon la revendication 1, dans lequel le matériau à prise hydraulique est un laitier de haut fourneau, et le mélange comprend un agent de contrôle de la rhéologie.

4. Mélange selon l'une des revendications 1 à 3, dans lequel l'agent de contrôle de la rhéologie est une argile naturelle ou modifiée, ou un polysaccharide.

5. Mélange selon la revendication 4, dans lequel l'argile naturelle ou modifiée est la bentonite.

6. Mélange selon la revendication 4, dans lequel le polysaccharide est la gomme de xanthane.

7. Mélange selon l'une des revendications 1 à 6, dans lequel le laitier de haut fourneau est broyé avec une finesse comprise dans la gamme allant de 2500 à 5000 Blaine, de préférence dans la gamme allant de 3500 à 4500 Blaine.

8. Mélange selon l'une des revendications 1 à 7 dans lequel le matériau à prise hydraulique est un laitier de haut fourneau, qui comprend en outre (d) un agent activant en une quantité comprise dans la gamme allant de 2,5 à 5% en poids, par rapport au poids du laitier de haut fourneau.

9. Mélange selon l'une des revendications 1 à 8, dans lequel la silice a une D50 comprise dans la gamme allant de 40 µm à 80 µm.

10. Coulis pour sonde géothermique comprenant, pour 1m³ de coulis, 500 L à 600 L d'eau, et 1000 kg à 1300 kg du mélange selon l'une des revendications 1 à 9.

11. Coulis selon la revendication 10, qui possède une conductivité thermique supérieure ou égale à 2 W/m.K.

12. Coulis selon la revendication 10, qui possède à l'état durci une résistance mécanique à la compression à 28 jours comprise dans la gamme allant de 1 MPa à 3 MPa.

13. Procédé de mise en place d'une sonde géothermique, qui comprend une étape d'injection du coulis tel que défini dans l'une des revendications 10 à 12.

14. Procédé selon la revendication 13 mettant en oeuvre un coulis comprenant un laitier de haut fourneau, ledit procédé comprenant en outre une étape d'activation dudit laitier de haut fourneau.
